# FASCICULE DE BREVET EUROPEEN

(11) **EP 1 705 400 B1**
(45) Date de publication et mention de la délivrance du brevet: **11.05.2011**
(21) Numéro de dépôt: 06290469.3
(22) Date de dépôt: 22.03.2006
(51) Int. Cl.: F16F 13/30

(54) **Dispositif antivibratoire hydraulique contenant un fluide a viscosite commandée, système comportant un tel dispositif et véhicule comportant un tel système**
Schwingungsdämpfende Vorrichtung enthaltend eine Flüssigkeit mit regelbarer Viskosität, System mit solcher Vorrichtung und Fahrzeug mit solchem System
Vibration damping device containing a variable viscosity fluid, system comprising such a device and vehicle comprising such a system

(30) Priorité: 23.03.2005 FR 0502892
(43) Date de publication de la demande: 27.09.2006
(73) Titulaire: HUTCHINSON, 75008 Paris (FR)
(72) Inventeur: Piquet, Boris, 45160 Olivet (FR); Picaton, Yannick, 18100 Vierzon (FR)
(74) Mandataire: Burbaud, Eric

(56) Documents cités:
- FR-A- 2 812 052
- US-A- 5 050 850

## Description

La présente invention se rapporte à un dispositif antivibratoire.

Plus particulièrement, l'invention concerne un dispositif antivibratoire comprenant une armature interne annulaire s'étendant selon un premier axe longitudinal, une armature externe annulaire, entourant l'armature interne, s'étendant selon un deuxième axe longitudinal parallèle au premier axe, une armature intermédiaire annulaire s'étendant longitudinalement entre l'armature interne et l'armature externe, et entourant l'armature interne, un corps en élastomère reliant l'armature externe à ladite armature intermédiaire, au moins deux chambres délimitées par le corps en élastomère et reliées entre elles par au moins un canal, les deux chambres et le canal étant remplis d'un fluide à viscosité commandée présentant des caractéristiques magnétorhéologiques et au moins un dispositif de commande comportant une bobine adaptée pour générer un champ magnétique permettant de modifier la viscosité du fluide.

Le document US 5 050 850 décrit un exemple d'un tel dispositif dans lequel les chambres sont remplies d'un fluide électrorhéologique. De plus le dispositif comporte en outre des électrodes disposées dans le canal reliant les chambres. L'activation de ces électrodes entraîne la variation de viscosité du fluide de manière à ce que l'écoulement du flux du liquide passant à travers le canal soit modifié, pour ainsi modifier la raideur du dispositif.

Cependant, les fluides électrorhéologiques nécessitent des tensions très élevées (>1000V) et présentent une limite de champ électrique pour laquelle il peut y avoir un court-circuit électrique avec un passage d'un courant fort dans le fluide et une dégradation de celui-ci.

Le document FR-A-2 812 052 décrit un dispositif antivibratoire pour un système de liaison «roue-chassis » d'un véhicule. Ce dispositif comporte des chambres remplies de fluide magnétorhéologique dont la viscosité est commandée par un solénoïde disposé entre un corps en élastomère et une armature intermédiaire.

La présente invention vise à proposer un dispositif capable de présenter différentes caractéristiques de raideur, par l'intermédiaire d'un moyen différent de celui de l'art antérieur.

A cet effet, selon l'invention un dispositif du genre en question est caractérisé en ce que la bobine est disposée entre l'armature interne et ladite armature intermédiaire, et en ce que le canal s'étend entre l'armature interne et ladite armature intermédiaire, et en ce que le dispositif comporte des éléments ferromagnétiques et amagnétiques, disposés entre l'armature interne et l'armature intermédiaire délimitant partiellement le canal et définissant, en coopération avec la bobine, un circuit magnétique dans lequel le champ magnétique traverse le canal selon une direction déterminée.

Grâce à ces dispositions, la viscosité du fluide peut varier en fonction du champ électromagnétique généré par la bobine en utilisant des tensions moins élevées que pour un fluide électrorhéologique (par exemple de 14V) et sans risque électrique, car il n'y a pas d'électrode en contact avec le fluide. Ces dispositifs sont donc plus facilement utilisables, notamment dans le domaine automobile. Ainsi le dispositif peut présenter des raideurs variables en fonction de la viscosité du fluide.

De plus, ces caractéristiques permettent d'obtenir un module cylindrique standard comportant son propre circuit magnétique fermé.

Dans divers modes de réalisation du dispositif antivibratoire selon l'invention, on peut éventuellement avoir recours en outre à l'une et/ou à l'autre des dispositions suivantes :
- le canal s'étend de préférence sensiblement orthoradialement entre l'armature interne et l'armature intermédiaire, et est disposé entre la bobine et un élément amagnétique de manière à orienter le champ magnétique transversalement par rapport audit canal ;
- l'armature intermédiaire, l'armature interne, la bobine, les éléments en matériau ferromagnétique et amagnétique sont adaptés pour former un module cylindrique ;
- l'armature intermédiaire comporte au moins deux ouvertures transversales destinées à être disposées à chaque extrémité du canal de manière à relier le canal aux deux chambres ;
- les deux chambres sont opposées diamétralement l'une de l'autre ;
- le dispositif est adapté pour former un manchon hydraulique destiné à être utilisé sur la suspension de véhicule.

L'invention concerne aussi un système de commande comportant un tel dispositif et un véhicule comportant un tel système de commande tel que décrit précédemment.

D'autres caractéristiques et avantages de l'invention apparaîtront au cours de la description suivante d'un de ces modes de réalisation, donnée à titre d'exemple non limitatif, en regard des dessins joints.

Sur les dessins :
- la figure 1 représente une vue en coupe longitudinale selon la ligne I-I de la figure 3 d'un dispositif selon l'invention,
- la figure 2 représente une vue en coupe longitudinale selon la ligne II-II de la figure 3, du dispositif selon l'invention,
- la figure 3 représente une vue en coupe transversale selon la ligne III-III sur la figure 1,
- la figure 4 représente un graphique des raideurs du dispositif selon l'invention, chaque courbe représentant une raideur pour une viscosité de fluide différente,
- la figure 5 représente trois courbes de l'évolution de la phase en fonction de la fréquence, pour trois viscosités de fluide différentes,
- la figure 6 représente un schéma du système de commande selon l'invention ;
- la figure 7 représente une vue en perspective d'un dispositif selon l'invention, présentant une coupe longitudinale selon la ligne VII-VII de la figure 3.

Sur les différentes figures les mêmes références désignent des éléments identiques ou similaires.

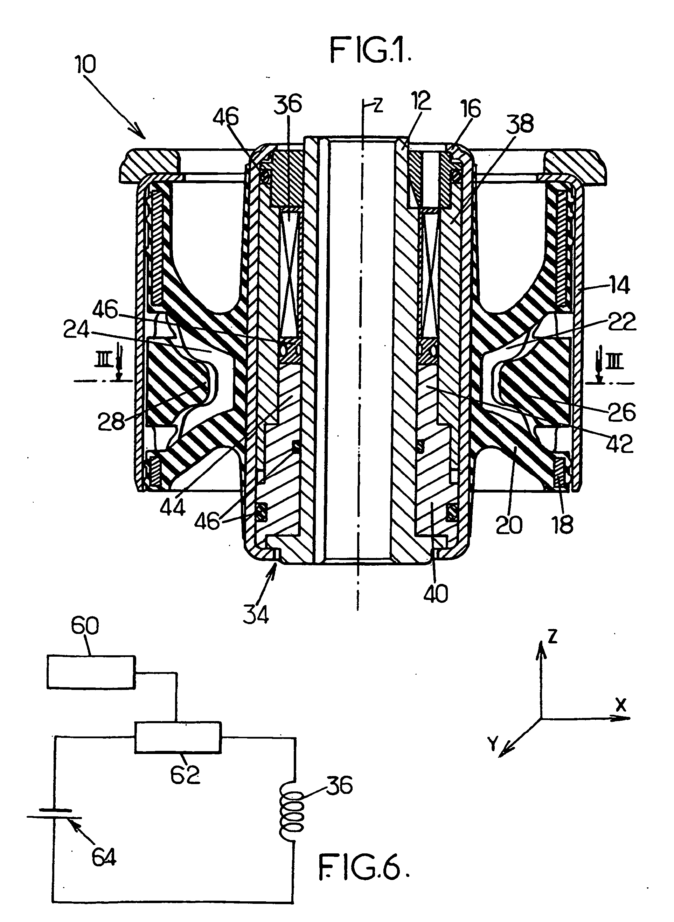

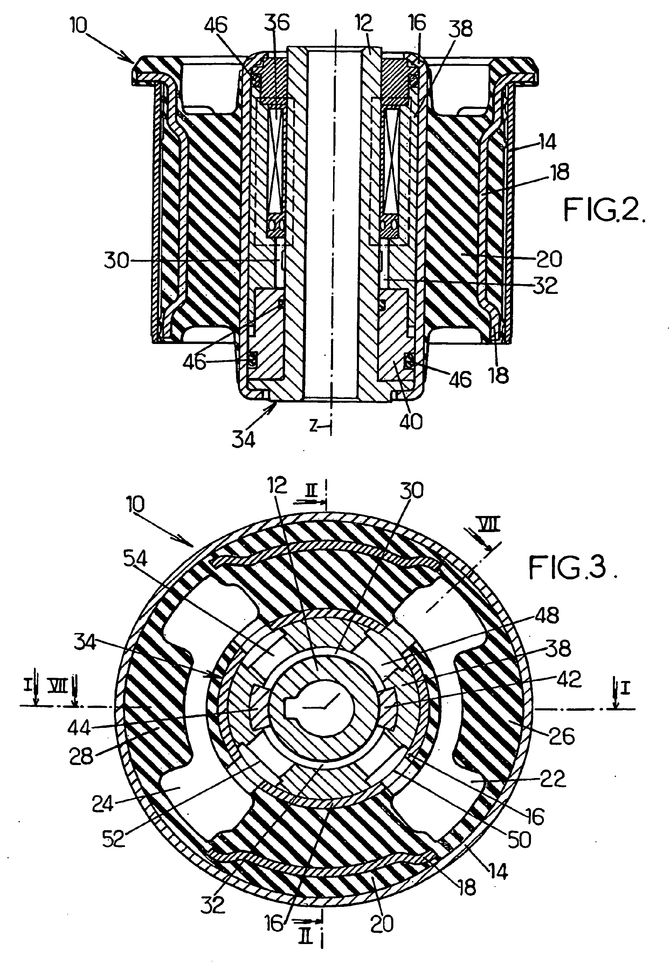

Les figures 1 et 2 représentent des vues en coupe longitudinale selon l'axe Z d'un dispositif antivibratoire 10 selon l'invention. La coupe de la figure 1 est réalisée selon un plan perpendiculaire à la coupe de la figure 2.

Sur ces figures le dispositif antivibratoire 10 comprend une armature interne 12 cylindrique autour de un axe longitudinal Z, et une armature externe 14 cylindrique et coaxiale à l'axe Z. Chaque armature 12, 14 est destinée à être fixée sur un élément de structure afin de limiter la transmission des vibrations entre les deux éléments de structure. Ces éléments de structure peuvent être par exemple une suspension et la caisse d'un véhicule. Une première 16 et une deuxième 18 armature intermédiaire sont disposées entre l'armature interne 12 et l'armature externe 14. Un corps en élastomère 20 est surmoulé sur la première armature intermédiaire 16 et fixé entre l'armature externe 14 et la première armature intermédiaire 16, selon des procédés bien connus de l'homme du métier.

Le dispositif antivibratoire tel que décrit précédemment trouve une application particulière dans un véhicule pour limiter la transmission des vibrations entre deux éléments de structure.

Le corps en élastomère 20 disposé entre l'armature externe 14 et la première armature intermédiaire 16 délimite partiellement deux chambres 22, 24 diamétralement opposées. Le corps en élastomère peut présenter deux butées 26, 28 dirigées vers chacune des chambres 22, 24, de manière à limiter les déplacements de l'armature interne 12 selon un axe transversale hydraulique X. De manière alternative ces butées 26, 28 peuvent être réalisées en plastique rigide.

Les chambres 22, 24 s'étendent sensiblement ortho radialement entre l'armature externe 14 et la première armature intermédiaire 16 parallèlement entre elles. Chaque chambre 22, 24 est remplie d'un fluide, et communique entre elles par l'intermédiaire de deux canaux 30, 32. Les canaux disposées entre l'armature interne 12 et la première armature intermédiaire 16 s'étendent selon une direction orthoradiale par rapport à l'axe longitudinal Z et sensiblement perpendiculairement à la direction orthoradiale des chambres 22, 24.

Les deux canaux 30, 32 sont indépendants et ne communiquent pas l'un avec l'autre. Ils présentent une forme semi-circulaire et sont disposés symétriquement par rapport à l'axe longitudinal Z. Chaque extrémité du canal 30, 32 est reliée à une extrémité des chambres formées dans le corps en élastomère. Une des parois délimitant le canal 30, 32 est formée par l'armature interne 12.

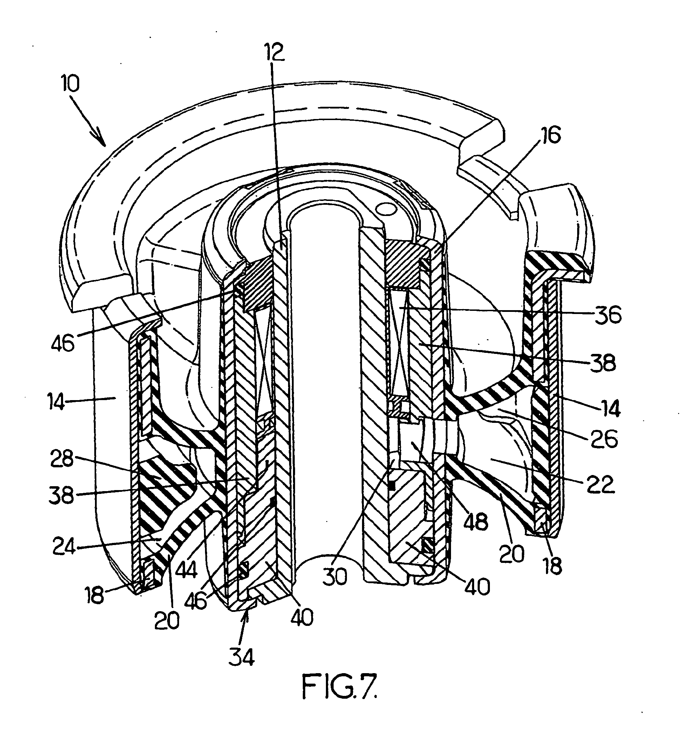

Le dispositif antivibratoire selon l'invention comporte en outre un module cylindrique 34, représenté à la figure 7, dont la paroi extérieure est formée par la première armature intermédiaire 16 et la paroi intérieure est formée par l'armature interne 12. De plus ce module 34 comporte une bobine 36 disposée adjacente à l'armature interne 12, dans la partie supérieure du dispositif 10.

Cette bobine 36 est alimentée en courant par l'intermédiaire de deux fils reliés à une alimentation. Le module 34 comprend en outre différentes pièces métalliques ferromagnétiques 38 disposées adjacentes à la première armature intermédiaire 16 du module 34 et délimitant partiellement, avec l'armature interne 12, les canaux 30, 32 prévus pour le passage du fluide. Les parois des canaux 30, 32 sont réalisés de manière à ce qu'elles soient disposées longitudinalement au même niveau que les chambres 22, 24. Tel que représenté sur les figures 1 à 3 les canaux 30, 32 et les chambres 22, 24 sont disposés sensiblement dans un plan médian perpendiculaire à l'axe longitudinal Z.

Le module comporte en outre un élément amagnétique 40 cylindrique et coaxial à l'axe longitudinal Z. Cet élément amagnétique 40 s'étend entre l'armature interne 12 et la première armature intermédiaire 16 du module 34, dans la portion inférieure du dispositif 10. Cet élément amagnétique 40 comporte en outre deux parties 42, 44 qui font saillie en direction de la portion supérieure du dispositif 10, et sont situées transversalement entre l'armature interne 12 et l'élément magnétique 38, de manière à éviter les fuites de flux magnétique entre l'élément magnétique 38 et l'armature interne 12.

Ainsi l'élément ferromagnétique 38 et amagnétique 40 définissent en coopération avec la bobine 36 un circuit magnétique dans lequel le champ magnétique traverse les canaux 30, 32 selon une direction transversale.

Des joints d'étanchéité 46 sont aussi prévus pour éviter des fuites du fluide magnétorhéologique entre la première armature intermédiaire 16 et l'élément magnétique 38, entre la première armature intermédiaire 16 et l'élément amagnétique 40, entre l'élément amagnétique 40 et l'armature interne 12, entre l'élément magnétique 38 et l'armature interne 12, et par l'orifice de sortie des fils d'alimentation.

Le module 34 comporte en outre quatre ouvertures 48, 50, 52, 54 transversales qui se situent sensiblement au même niveau longitudinal que les chambres 22, 24 et le canal 30, 32. Ces ouvertures 48, 50, 52, 54 débouchent d'une part à une extrémité du canal 30, 32 et d'autre part à l'une des extrémités de la chambre 22, 24, de manière à relier le canal 30, 32 aux deux chambres 22, 24.

Le module 34 ainsi réalisé présente une forme extérieure cylindrique et offre l'avantage de pouvoir être disposé dans différents types de dispositifs antivibratoires, entre le corps en élastomère 20 et l'armature interne 12, la seule condition étant que les ouvertures des chambres 22, 24 soient en regard des ouvertures du module 34.

De plus dans ce type de dispositif antivibratoire 10 le poids du dispositif est principalement situé dans le module 34 ce qui est avantageux car c'est la partie du dispositif qui est la moins sollicitée, par exemple lorsque l'armature interne 12 est reliée à la caisse par l'intermédiaire d'une vis traversante et que l'armature externe 14 est reliée au bras de suspension. Cela permet d'éviter des problèmes d'inertie, grâce à la réduction de la masse non suspendue (celle de l'armature externe), et permet aussi d'éviter les problèmes de connexion, car les câbles reliés au dispositif sont fixés au module, et n'ont pas besoin de présenter une grande longueur de débattement.

L'invention décrite ci-dessus fonctionne comme suit.

Le fluide disposé dans les chambres 22, 24 et s'écoulant à travers du canal 30, 32 présente des caractéristiques magnéto rhéologiques. C'est-à-dire que le champ magnétique généré par la bobine 36 va entraîner un changement de viscosité du fluide.

La bobine 36 est alimentée par une source de tension continue, telle que la tension de la batterie du véhicule ou une tension inférieure à celle de la batterie grâce à des fils de cuivre non représentés sur les figures. La tension permet de magnétiser le circuit. La loi en tension alimentant la bobine 36 peut être du type : élevée pendant un temps très court, par exemple 14V pendant 5ms, puis moins élevée par la suite, par exemple 4 volts. Ce qui permet d'avoir un temps de réponse très court, et aussi une consommation en tension relativement faible.

Lorsque la bobine 36 n'est pas alimentée le fluide présente une viscosité telle qu'il puisse s'écouler dans le canal 30, 32. Ainsi, lorsque les armatures internes 12 et externes 14 sont soumises à des mouvements vibratoires relatifs, les vibrations provoquent le transfert de liquide entre les chambres hydrauliques par l'intermédiaire des deux canaux 30, 32, lesdits canaux 30, 32 étant dimensionnés de façon à présenter une fréquence de résonance du fluide dans le canal voisine de la fréquence des vibrations.

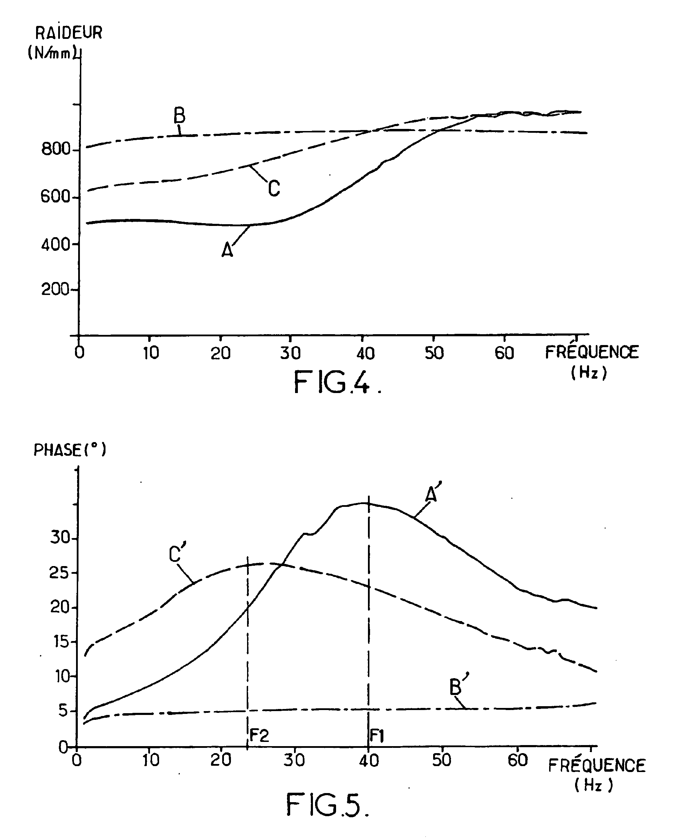

En l'absence de courant électrique c'est-à-dire lorsque la bobine n'est pas alimentée, le dispositif présente une faible raideur statique et une rigidification dynamique due au passage du fluide d'une chambre à l'autre. Tel que représenté sur les schémas des figures 4 et 5, par les courbes A et A', le dispositif selon l'invention présente une raideur dynamique qui trouve une valeur optimale pour une fréquence F1 d'environ 40 Hz. Cependant cette valeur n'est donnée qu'à titre d'exemple et dépend de la section et de la longueur du canal 30, 32.

Lorsque la bobine 36 est alimentée par du courant, elle génère un champ magnétique, représenté par une ligne en pointillés sur la figure 2, et dirigé dans un entrefer formé par les éléments du module 34 présentant des caractéristiques magnétiques et amagnétique. Le dispositif est réalisé de manière telle que le canal 30, 32 est disposé dans l'entrefer. Le champ magnétique appliqué au fluide passant dans le canal 30, 32 et chargé de particules de fer va modifier les caractéristiques rhéologiques du fluide, notamment sa viscosité. La viscosité du fluide va varier en fonction du niveau du courant appliqué à la bobine 36, et pour un même dimensionnement du canal 30, 32 et pour un même type de vibrations appliqué à l'armature interne 12 et à l'armature externe 14, il est possible d'obtenir deux types d'effets d'amortissement.

Selon un premier type, l'augmentation de la viscosité du fluide est suffisante pour empêcher le passage du fluide dans le canal 30,32. Le dispositif 10 présente alors une raideur statique plus élevée et fonctionne comme un dispositif hydraulique à chambre fermée.

La courbe B de la figure 4 illustre que, dans ce cas, la raideur dynamique reste sensiblement constante quelle que soit la fréquence de vibrations.

Le deuxième type d'amortissement peut être obtenu lorsque le champ magnétique appliqué entraîne une augmentation de la viscosité du fluide, mais de manière à ce que le fluide puisse circuler entre les deux chambres 22, 24 par le canal 30, 32. Le fluide s'écoule moins facilement et l'amortissement fonctionne mieux pour une gamme de fréquences plus basses. Ce type d'effet est illustré par la courbe C' sur la figure 5 sur laquelle on peut voir que le maximum de phases se trouve décalé à une fréquence F2 inférieure à la fréquence F1. L'évolution de la raideur par rapport à la fréquence des vibrations est illustrée par la courbe C de la figure 4.

Ainsi il est possible de piloter la raideur du dispositif antivibratoire en fonction de différents paramètres. Lorsqu'un tel dispositif est disposé dans un véhicule il est notamment possible de faire varier sa raideur en fonction du type de roulage du véhicule et du type de confort que l'on souhaite. Notamment il est possible d'obtenir un dispositif antivibratoire présentant une raideur élevée lorsque le véhicule est sur un réglage « sport » et d'obtenir une raideur plus faible lorsque l'utilisateur souhaite un réglage « confort ».

Pour cela il est prévu un système de commande de la viscosité du fluide circulant dans le dispositif antivibratoire. Le système de commande comporte un dispositif antivibratoire tel que décrit précédemment, une unité centrale 60, et un moyen de commande 62. L'unité centrale traite des paramètres prédéterminés tels que le régime moteur, la vitesse du véhicule, le rapport engagé, l'angle au volant, le freinage, et active, en fonction des résultats obtenus, le moyen de commande 62.

Le moyen de commande permet à la bobine 36 d'être alimentée en tension au moyen de la source de tension 64 et de faire varier cette tension afin de modifier le type d'amortissement du dispositif antivibratoire, tel que décrit précédemment.

Ce pilotage est obtenu par le déplacement de la fréquence des modes de résonance.

De plus le module 34 compact permet d'intégrer, directement dans le dispositif antivibratoire 10, l'ensemble des moyens permettant la « fermeture » ou « l'ouverture » du canal, et offre un temps de réponse très court (< 100ms) grâce à l'absence de pièces mécaniques mobiles, telle qu'une vanne classique de fermeture/ouverture.

Le dispositif consomme peu d'énergie (< 10Watt) et il est possible de piloter continuellement la raideur, et par conséquent les capacités d'amortissement, en faisant varier le courant électrique alimentant la bobine.

Selon une variante de réalisation, le module peut comporter un aimant permanent générant un champ magnétique s'exerçant sur le fluide circulant dans le canal. Dans ce cas, lorsque la bobine n'est pas alimentée par un courant, la raideur du dispositif est élevée. Lorsque la bobine est alimentée, le champ magnétique généré par la bobine annule le champ magnétique généré par l'aimant et permet d'obtenir une raideur plus faible.

Dans une application particulière, le dispositif tel que décrit dans le premier mode de réalisation et dans les variantes de réalisation, forme un manchon hydraulique destiné à être utilisé sur la suspension d'un véhicule.

## Revendications

1. Dispositif antivibratoire comprenant:
- une armature interne (12) annulaire s'étendant selon un premier axe longitudinal (Z),
- une armature externe (14) annulaire, entourant l'armature interne, s'étendant selon un deuxième axe longitudinal parallèle au premier axe,
- une armature intermédiaire (16) annulaire s'étendant longitudinalement entre l'armature interne (12) et l'armature externe (14), et entourant l'armature interne,
- un corps en élastomère (20) reliant l'armature externe (14) à ladite armature intermédiaire (16),
- au moins deux chambres (22, 24) délimitées par le corps en élastomère (20) et reliées entre elles par au moins un canal (30, 32), les deux chambres (22, 24) et le canal (30, 32) étant remplis d'un fluide à viscosité commandée présentant des caractéristiques magnéto-rhéologiques et
- au moins un dispositif de commande comportant une bobine (36) adaptée pour générer un champ magnétique permettant de modifier la viscosité du fluide,
**caractérisé en ce que** la bobine (36) est disposée entre l'armature interne (12) et ladite armature intermédiaire (16),
**en ce que** le canal (30, 32) s'étend entre l'armature interne (12) et ladite armature intermédiaire (16),
et **en ce que** le dispositif comporte des éléments ferromagnétique (38) et amagnétique (40), disposés entre l'armature interne (12) et l'armature intermédiaire, délimitant partiellement le canal (30, 32) et définissant, en coopération avec la bobine (36), un circuit magnétique dans lequel le champ magnétique traverse le canal (30, 32) selon une direction déterminée.

2. Dispositif selon la revendication 1, dans lequel le canal (30, 32) s'étend de préférence sensiblement orthoradialement entre l'armature interne (12) et l'armature intermédiaire (16) et est disposé entre la bobine (36) et un élément amagnétique (40) de manière à orienter le champ magnétique transversalement par rapport audit canal (30, 32).

3. Dispositif selon l'une des revendications précédentes, dans lequel l'armature intermédiaire (16), l'armature interne (12), la bobine (36), les éléments en matériau ferromagnétique (38) et amagnétique (40) sont adaptés pour former un module cylindrique (34).

4. Dispositif selon l'une des revendications précédentes, dans lequel l'armature intermédiaire (16) comporte au moins deux ouvertures transversales (48, 50, 52, 54) destinées à être disposées à chaque extrémité du canal (30, 32) de manière à relier le canal (30, 32) aux deux chambres (22, 24).

5. Dispositif selon l'une des revendications précédentes, dans lequel les deux chambres (22, 24) sont opposées diamétralement l'une par rapport à l'autre.

6. Système de commande de la viscosité d'un fluide circulant dans un dispositif antivibratoire selon l'une des revendications précédentes, **caractérisé en ce qu'**il comporte un dispositif antivibratoire selon l'une des revendications précédentes, une unité centrale (60) recevant et analysant des paramètres, et adaptée pour activer un moyen de commande (62) permettant d'alimenter la bobine (36) en fonction des paramètres.

7. Véhicule **caractérisé en ce qu'**il comprend un système de commande de la viscosité d'un fluide selon la revendication 6.

## Claims

1. Vibration damping device comprising:
- an annular internal armature (12) which extends along a first longitudinal axis (Z),
- an annular external armature (14) which surrounds the internal armature and which extends along a second longitudinal axis parallel with the first axis,
- an annular intermediate armature (16) which extends longitudinally between the internal armature (12) and the external armature (14) and which surrounds the internal armature,
- an elastomer body (20) which connects the external armature (14) to said intermediate armature (16),
- at least two chambers (22, 24) which are delimited by the elastomer body (20) and which are connected to each other by at least one channel (30, 32), the two chambers (22, 24) and the channel (30, 32) being filled with a fluid which has controlled viscosity and which has magnetorheological characteristics and
- at least one control device which comprises a coil (36) which is capable of generating a magnetic field which allows the viscosity of the fluid to be modified,
**characterised in that** the coil (36) is arranged between the internal armature (12) and said intermediate armature (16), **in that** the channel (30, 32) extends between the internal armature (12) and said intermediate armature (16),
and **in that** the device comprises ferromagnetic elements (38) and amagnetic elements (40) which are arranged between the internal armature (12) and the intermediate armature partially delimiting the channel (30, 32) and defining, in co-operation with the coil (36), a magnetic circuit in which the magnetic field extends through the channel (30, 32) in a predetermined direction.

2. Device according to claim 1, wherein the channel (30, 32) preferably extends in a substantially orthoradial manner between the internal armature (12) and the intermediate armature (16) and is arranged between the coil (36) and an amagnetic element (40) so as to orientate the magnetic field transversely relative to the channel (30, 32).

3. Device according to any one of the preceding claims, wherein the intermediate armature (16), the internal armature (12), the coil (36), the elements of ferromagnetic material (38) and amagnetic material (40) are capable of forming a cylindrical module (34).

4. Device according to any one of the preceding claims, wherein the intermediate armature (16) comprises at least two transverse openings (48, 50, 52, 54) which are intended to be arranged at each end of the channel (30, 32) so as to connect the channel (30, 32) to the two chambers (22, 24).

5. Device according to any one of the preceding claims, wherein the two chambers (22, 24) are diametrically opposed to each other.

6. System for controlling the viscosity of a fluid flowing in a vibration damping device according to any one of the preceding claims, **characterised in that** it comprises a vibration damping device according to any one of the preceding claims, a central unit (60) which receives and analyses parameters and which is capable of activating a control means (62) which allows the coil (36) to be supplied with electrical power in accordance with the parameters.

7. Vehicle, **characterised in that** it comprises a system for controlling the viscosity of a fluid in accordance with claim 6.

## Patentansprüche

1. Schwingungsdämpfende Vorrichtung, umfassend:
- eine ringförmige Innenbewehrung (12), die sich entlang einer ersten Längsachse (Z) erstreckt,
- eine ringförmige Außenbewehrung (14), die die Innenbewehrung umgibt und sich entlang einer zweiten Längsachse erstreckt, die parallel zu der ersten Achse ist,
- eine ringförmige Zwischenbewehrung (16), die sich longitudinal zwischen der Innenbewehrung (12) und der Außenbewehrung (14) erstreckt und die Innenbewehrung umgibt,
- einen Körper aus Elastomer (20), der die Außenbewehrung (14) mit der Zwischenbewehrung (16) verbindet,
- wenigstens zwei Kammern (22, 24), die durch den Körper aus Elastomer (20) begrenzt sind und miteinander durch wenistens einen Kanal (30, 32) verbunden sind, wobei die beiden Kammern (22, 24) und der Kanal (30, 32) mit einem Fluid mit regelbarer/steuerbarer Viskosität gefüllt sind, das magnetorheologische Eigenschaften aufweist, und
- wenigsten eine Regelungs-/Steuerungsvorrichtung, umfassend eine Spule (36), die dazu angepasst ist, ein Magnetfeld zu erzeugen, welches es ermöglicht, die Viskosität des Fluids zu ändern,
**dadurch gekennzeichnet, dass** die Spule (36) zwischen der Innenbewehrung (12) und der Zwischenbewehrung (16) angeordnet ist, und dass der Kanal (30, 32) sich zwischen der Innenbewehrung (12) und der Zwischenbewehrung (16) erstreckt,
und dass die Vorrichtung ferromagnetische (38) und nichtmagnetische (40) Elemente umfasst, die zwischen der Innenbewehrung (12) und der Zwischenbewehrung angeordnet sind und den Kanal (30, 32) teilweise begrenzen und durch Zusammenwirken mit der Spule (36) einen magnetischen Kreis definieren, in welchem das Magnetfeld den Kanal (30, 32) in einer vorbestimmten Richtung durchsetzt.

2. Vorrichtung nach Anspruch 1, wobei der Kanal (30, 32) sich vorzugsweise im Wesentlichen orthoradial zwischen der Innenbewehrung (12) und der Zwischenbewehrung (16) erstreckt und zwischen der Spule (36) und einem nichtmagnetischen Element (40) so angeordnet ist, dass das Magnetfeld transversal in Bezug auf den Kanal (30, 32) ausgerichtet ist.

3. Vorrichtung nach einem der vorhergehenden Ansprüche, wobei die Zwischenbewehrung (16), die Innenbewehrung (12), die Spule (36), die Elemente aus ferromagnetischem (38) und nichtmagnetischem (40) Material dazu angepasst sind, ein zylindrisches Modul (34) zu bilden.

4. Vorrichtung nach einem der vorhergehenden Ansprüche, wobei die Zwischenbewehrung (16) wenigstens zwei transversale Öffnungen (48, 50, 52, 54) umfasst, die dazu bestimmt sind, an jedem Ende des Kanals (30, 32) derart angeordnet zu sein, dass der Kanal (30, 32) mit den beiden Kammern (22, 24) verbunden ist.

5. Vorrichtung nach einem der vorhergehenden Ansprüche, wobei die beiden Kammern (22, 24) sich einander diametral gegenüberliegen.

6. System zur Regelung/Steuerung der Viskosität eines Fluids, das in einer schwingungsdämpfenden Vorrichtung nach einem der vorhergehenden Ansprüche umläuft, **dadurch gekennzeichnet, dass** das System eine schwingungsdämpfende Vorrichtung nach einem der vorhergehenden Ansprüche und eine Zentraleinheit (60) umfasst, die Parameter erhält und analysiert, und dazu angepasst ist, ein Regelungs-/Steuerungsmittel (62) zu aktivieren, das es ermöglicht, die Spule (36) in Abhängigkeit von den Parametern zu speisen.

7. Fahrzeug, **dadurch gekennzeichnet, dass** es ein System zur Regelung/Steuerung der Viskosität eines Fluids nach Anspruch 6 umfasst.
